# EUROPEAN PATENT APPLICATION

(11) **EP 2 426 599 A1**
(43) Date of publication of application: **07.03.2012**
(21) Application number: 10788789.5
(22) Date of filing: 20.05.2010
(51) Int. Cl.: G06F 9/44

(54) **METHOD AND SYSTEM FOR REALIZING DYNAMIC ADJUSTMENT OF TOOLBAR BUTTON DISPLAY**

(30) Priority: 15.06.2009 CN 200910108073
(71) Applicant: ZTE Corporation, Shenzhen, Guangdong 518057 (CN)
(72) Inventor: SHI, Zhongbo, Shenzhen Guangdong 518057 (CN)
(74) Representative: Lemcke, Brommer & Partner
(86) International application number: PCT/CN2010/072970
(87) International publication number: WO 2010/145393

(57) **Abstract**

The present invention discloses a method for realizing a dynamic adjustment of toolbar button display, which comprises: loading a toolbar through a peripheral interface and initializing the toolbar; calling a toolbar button setting interface and setting each button parameter in a toolbar button container; correspondingly adjusting display of each button in the toolbar when the toolbar is adjusted. The present invention further correspondingly discloses a system for realizing a dynamic adjustment of toolbar button display. The present invention applies a development technology of separating the button function and the button display, the specialized code and arithmetic are not needed to design for the position adjustment and arrangement of the toolbar in the process of development, so the development time of the system is greatly reduced and the development efficiency is improved.

## Description

### TECHNICAL FIELD

The present invention relates to a dynamic adjustment technology of toolbar button display, particularly to a method and system for realizing a dynamic adjustment of toolbar button display.

### BACKGROUND

There are toolbars consisting of buttons triggering a display effect to be constantly changed according to different conditions on windows of much software at present; therefore, refined calculation is required to adjust the position of each button of the toolbar on the window, which can waste much development time; moreover, when the number of the toolbar buttons is too much but the window is small in size in limited time, it is more troublesome to adjust the positions of the buttons. With the existing realization mode that a function is not separated from display, the development efficiency of the system is influenced. In conclusion, there is a lack of technology capable of dynamically adjusting button display according to the change of the toolbar in the prior art.

### SUMMARY

The technical problem to be solved by the present invention is to provide a method and system for realizing a dynamic adjustment of toolbar button display which can realize the dynamic adjustment of the button display along with the adjustment of the toolbar, thereby canceling the trouble of adjusting the display of the toolbar consisting of many buttons on a window in a development process and improving development efficiency.

The technical scheme adopted by the present invention is as follows.

A method for realizing a dynamic adjustment of toolbar button display comprises:
loading a toolbar through a peripheral interface, and initializing the toolbar;
calling a toolbar button setting interface, and setting each button parameter in a toolbar button container; and
correspondingly adjusting display of each button in the toolbar when the toolbar is adjusted.

The button parameter set in the toolbar button container may comprise one of the following setting contents: adding the button parameter, deleting the button parameter, and adjusting the button parameter.

The step of initializing the toolbar may comprise: setting a toolbar parameter; wherein the toolbar parameter may comprise: a parent window pointer, a message response window handle, a toolbar control ID, and a message number.

The set button parameter may specifically comprise: a button ID, a button width, a button word, a button type and acknowledge of a separating character.

The toolbar may be adjusted in any one of the following triggering manners: the toolbar receives a message of changing a window size, and the toolbar calls an adjustment function by an external window.

The step of adjusting the display of each button in the toolbar may comprise:
ensuring a sequence number of a first display button in the toolbar in a button container; and
recycling sequence numbers in the toolbar button container, and hiding the button of which the sequence number is smaller than the sequence number of the first display button; for the button of which the sequence number is greater than the sequence number of the first display button, further judging a display area of the toolbar to be capable of displaying the sum of the first display button to the width of the button completely; if yes, displaying the button; otherwise, hiding the button.

The method may further comprise: respectively setting two rolling buttons on both sides of the toolbar.

A system for realizing a dynamic adjustment of toolbar button display comprises: a toolbar loading unit, a button parameter setting unit and a button display control unit, wherein
the toolbar loading unit is used for loading a toolbar through a peripheral interface and initializing the toolbar;
the button parameter setting unit is used for calling a toolbar button setting interface and setting each button parameter in a toolbar button container; and
the button display control unit is used for correspondingly adjusting display of each button in the toolbar when the toolbar is adjusted.

The button parameter set in the toolbar button container may comprise one of the following setting contents: adding the button parameter, deleting the button parameter, and adjusting the button parameter.

The step of initializing the toolbar may comprise: setting a toolbar parameter; wherein the toolbar parameter may comprise: a parent window pointer, a message response window handle, a toolbar control ID, and a message number.

The set button parameter may specifically comprise: a button ID, a button width, a button word, a button type and acknowledge of a separating character.

The toolbar may be adjusted by the button display control unit: the toolbar is adjusted when the toolbar receives a message of changing a window size or the toolbar calls an adjustment function by an external window.

The step of adjusting the display of each button in the toolbar by the button display control unit may comprise:
ensuring a sequence number of a first display button in the toolbar in a button container; and
recycling sequence numbers in the toolbar button container, and hiding the button of which the sequence number is smaller than the sequence number of the first display button; for the button of which the sequence number is greater than the sequence number of the first display button, further judging a display area of the toolbar to be capable of displaying the sum of the first display button to the width of the button completely; if yes, displaying the button; otherwise, hiding the button.

The button parameter setting unit may be further used for setting two rolling buttons in the toolbar button container; the two rolling buttons may be respectively positioned on both sides of the toolbar.

The method and system for realizing a dynamic adjustment of toolbar button display establish the public interface object of the toolbar; so that the developer just needs to add buttons in the button container through calling interface when the buttons are designed and establishes the necessary association of the buttons without knowing about the realization details of the public interface object of the toolbar. Therefore, through the development technology that the button function is separated from the button display, no special coding or algorithm for the position adjustment and arrangement design of the toolbar is required in the development progress, thereby greatly reducing the development time of the system and improving the development efficiency.

### BRIEF DESCRIPTION OF THE DRAWINGS

Fig. 1 shows a schematic diagram of an embodiment of a system for realizing a dynamic adjustment of toolbar button display;
Fig. 2 shows a schematic diagram of interface calling of an embodiment of a system for realizing a dynamic adjustment of toolbar button display; and
Fig. 3 shows a flowchart of adjusting toolbar button display of an embodiment of a system for realizing a dynamic adjustment of toolbar button display.

### DETAILED DESCRIPTION

The technical scheme of the present invention is further described in details with reference to embodiments in conjunction with the drawings.

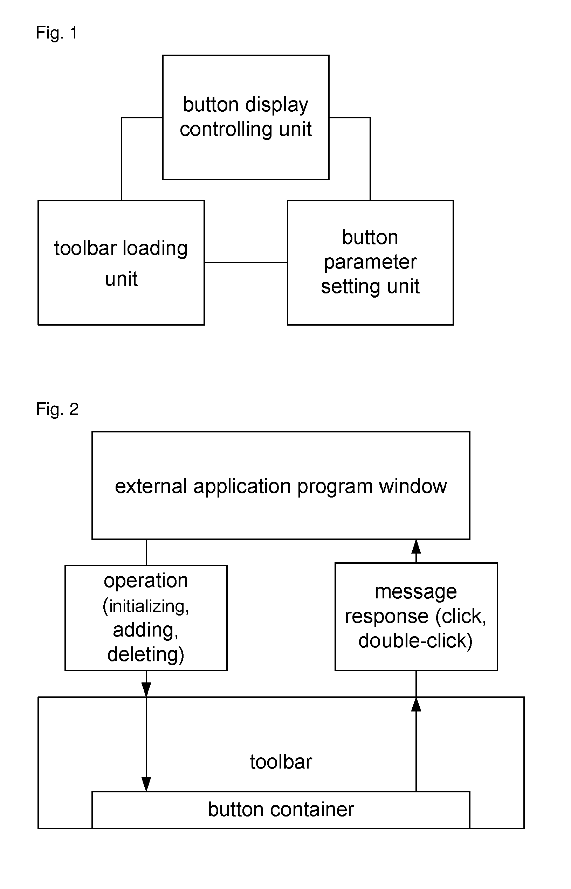

Fig. 1 shows a schematic diagram of an embodiment of a system for realizing a dynamic adjustment of toolbar button display. As shown in Fig. 1, a system for realizing a dynamic adjustment of toolbar button display comprises: a toolbar loading unit, a button parameter setting unit and a button display control unit, wherein
the toolbar loading unit is used for loading a toolbar through a peripheral interface and initializing the toolbar;
the button parameter setting unit is used for calling a toolbar button setting interface and setting each button parameter in a toolbar button container; and
the button display control unit is used for correspondingly adjusting display of each button in the toolbar when the toolbar is adjusted.

The button parameter set in the toolbar button container by the button parameter setting unit comprises one of the following contents: adding the button parameter, deleting the button parameter, and adjusting the button parameter; that is, operation of adding a button, deleting a button and adjusting a button parameter. Moreover, two rolling buttons can be set in the toolbar button container by the button parameter setting unit so that the two rolling buttons are respectively positioned on both sides of the toolbar and are used for adjusting the button displayed in a display area of the toolbar.

The interface calling principle for the toolbar is described in combination with Fig. 2. Fig. 2 shows a schematic diagram of interface calling of an embodiment of a system for realizing a dynamic adjustment of toolbar button display; as shown in Fig. 2, the interface calling operation is carried out for the toolbar by an external program through an external application program window: the toolbar is loaded and initialized through the peripheral interface; the toolbar is added, deleted or adjusted by using the calling interface, that is, each button parameter is set in the toolbar button container through calling the toolbar button setting interface; and the display of each button in the toolbar is adjusted correspondingly when the toolbar is adjusted. The basic operation comprises: adding the button, deleting the button and adjusting the button parameter. Each tool button is correspondingly indicated to a message response number so that the user can successfully send the message to a message response window handle when the toolbar button is clicked; a message parameter is included in the message, information such as a button ID clicked at present is contained in the parameter, and the corresponding function of the button is realized through the message response window handle. Different button IDs correspondingly realize different functions.

The step of initializing the toolbar comprises: setting a toolbar parameter; the toolbar parameter comprises: a parent window pointer, a message response window handle, a toolbar control ID, and a message number.

The button parameter comprises: a button ID, a button width, a button word, a button type and acknowledge of a separating character (i.e., whether to be a separating character).

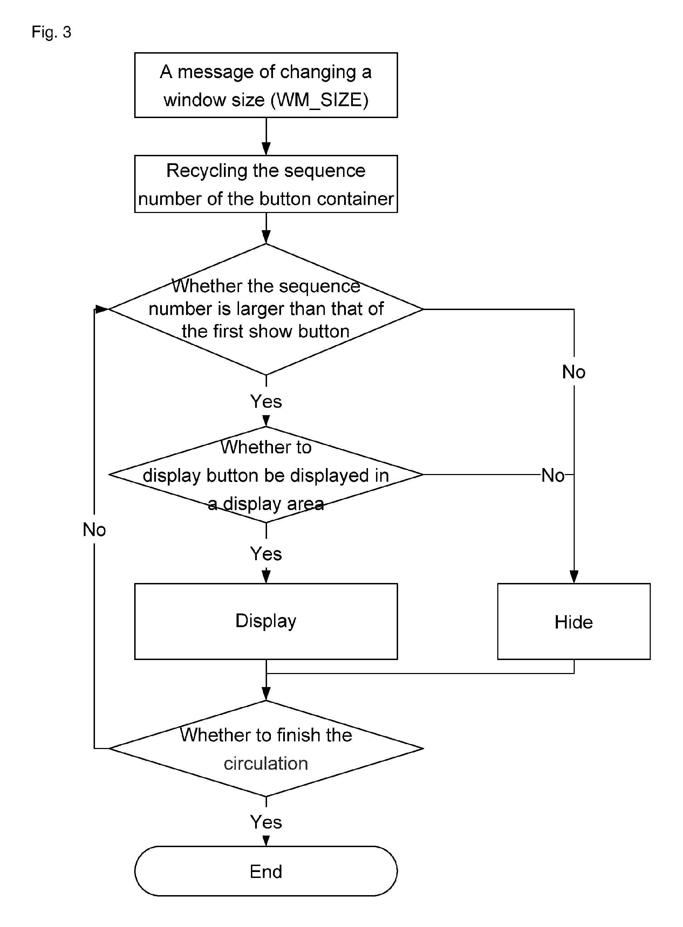

The processing process of the adjustment of the toolbar button is described in combination with Fig. 3.

Fig. 3 shows a flowchart of adjusting toolbar button display of an embodiment of a system for realizing a dynamic adjustment of toolbar button display. As shown in Fig. 3, when a toolbar receives a WM_SIZE message (the message of changing a window size) or calls an adjustment function by an external window, the position of a toolbar button is required to be adjusted. In the process of adjustment, firstly ensuring a sequence number of a first display button in the toolbar in a button container, which can be recorded as m_nlndex; recycling sequence numbers in the toolbar button container, and hiding the button of which the sequence number is smaller than m_nlndex of the first display button; for the button of which the sequence number is greater than m_nlndex of the first display button, further judging a display area of the toolbar to be capable of displaying the sum of the first display button to the width of the button completely; if yes, displaying the button; otherwise, hiding the button.

Moreover, two rolling buttons can be added on both sides of the toolbar so that the button displayed at present in the display area can be adjusted by rolling the left and right (up and down) buttons when the position is not enough, and the operation of rolling after the rolling button is clicked is to amend (add or substract) m_nlndex value, and then the adjustment function is carried out.

The above is only the preferred embodiment of the present invention and not intended to limit the scope of protection of the present invention, and any modifications, equivalent replacements, improvements and the like within the spirit and principle of the present invention shall fall within the scope of protection of the present invention.

## Claims

1. A method for realizing a dynamic adjustment of toolbar button display, comprising:
loading a toolbar through a peripheral interface, and initializing the toolbar;
calling a toolbar button setting interface, and setting each button parameter in a toolbar button container; and
correspondingly adjusting display of each button in the toolbar when the toolbar is adjusted.

2. The method for realizing a dynamic adjustment of toolbar button display according to claim 1, wherein the button parameter set in the toolbar button container comprises one of the following setting contents: adding the button parameter, deleting the button parameter, and adjusting the button parameter.

3. The method for realizing a dynamic adjustment of toolbar button display according to claim 1 or 2, wherein the step of initializing the toolbar comprises: setting a toolbar parameter; wherein the toolbar parameter comprises: a parent window pointer, a message response window handle, a toolbar control ID, and a message number.

4. The method for realizing a dynamic adjustment of toolbar button display according to claim 2, wherein the set button parameter specifically comprises: a button ID, a button width, a button word, a button type and acknowledge of a separating character.

5. The method for realizing a dynamic adjustment of toolbar button display according to claim 1 or 2, wherein the toolbar is adjusted in any one of the following triggering manners: the toolbar receives a message of changing a window size, and the toolbar calls an adjustment function by an external window.

6. The method for realizing a dynamic adjustment of toolbar button display according to claim 5, wherein the step of adjusting the display of each button in the toolbar comprises:
ensuring a sequence number of a first display button in the toolbar in a button container; and
recycling sequence numbers in the toolbar button container, and hiding the button of which the sequence number is smaller than the sequence number of the first display button; for the button of which the sequence number is greater than the sequence number of the first display button, further judging a display area of the toolbar to be capable of displaying the sum of the first display button to the width of the button completely; if yes, displaying the button; otherwise, hiding the button.

7. The method for realizing a dynamic adjustment of toolbar button display according to claim 1 or 2, further comprising: respectively setting two rolling buttons on both sides of the toolbar.

8. A system for realizing a dynamic adjustment of toolbar button display, comprising:
a toolbar loading unit, a button parameter setting unit and a button display control unit, wherein
the toolbar loading unit is used for loading a toolbar through a peripheral interface and initializing the toolbar;
the button parameter setting unit is used for calling a toolbar button setting interface and setting each button parameter in a toolbar button container; and
the button display control unit is used for correspondingly adjusting display of each button in the toolbar when the toolbar is adjusted.

9. The system for realizing a dynamic adjustment of toolbar button display according to claim 8, wherein the button parameter set in the toolbar button container comprises one of the following setting contents: adding the button parameter, deleting the button parameter, and adjusting the button parameter.

10. The system for realizing a dynamic adjustment of toolbar button display according to claim 8 or 9, wherein the step of initializing the toolbar comprises: setting a toolbar parameter; wherein the toolbar parameter comprises: a parent window pointer, a message response window handle, a toolbar control ID, and a message number.

11. The system for realizing a dynamic adjustment of toolbar button display according to claim 9, wherein the set button parameter specifically comprises: a button ID, a button width, a button word, a button type and acknowledge of a separating character.

12. The system for realizing a dynamic adjustment of toolbar button display according to claim 8 or 9, wherein the toolbar is adjusted by the button display control unit: the toolbar is adjusted when the toolbar receives a message of changing a window size or the toolbar calls an adjustment function by an external window.

13. The system for realizing a dynamic adjustment of toolbar button display according to claim 12, wherein the step of adjusting the display of each button in the toolbar by the button display control unit comprises:
ensuring a sequence number of a first display button in the toolbar in a button container; and
recycling sequence numbers in the toolbar button container, and hiding the button of which the sequence number is smaller than the sequence number of the first display button; for the button of which the sequence number is greater than the sequence number of the first display button, further judging a display area of the toolbar to be capable of displaying the sum of the first display button to the width of the button completely; if yes, displaying the button; otherwise, hiding the button.

14. The system for realizing a dynamic adjustment of toolbar button display according to claim 8 or 9, wherein the button parameter setting unit is further used for setting two rolling buttons in the toolbar button container; the two rolling buttons are respectively positioned on both sides of the toolbar.
